# EUROPEAN PATENT APPLICATION

(11) **EP 2 133 875 A1**
(43) Date of publication of application: **16.12.2009**
(21) Application number: 07740728.6
(22) Date of filing: 30.03.2007
(51) Int. Cl.: G11B 7/007

(54) **OPTICAL DISC**

(71) Applicant: Pioneer Corporation, Tokyo 153-8654 (JP)
(72) Inventor: KURODA, Kazuo, Tokorozawa-shi Saitama 359-8522 (JP); MURAMATSU, Eiji, Tokorozawa-shi Saitama 359-8522 (JP); KITANO, Kazutoshi, Tokorozawa-shi Saitama 359-8522 (JP)
(74) Representative: Viering, Jentschura & Partner
(86) International application number: PCT/JP2007/057292
(87) International publication number: WO 2008/126327

(57) **Abstract**

An optical disc (100) from which a plurality of pieces of information recorded along a track (9) by irradiating light that moves above the track relatively are reproduced in parallel. The optical disc has a disc substrate (1), and a recording layer (2) formed thereon. On the recording layer, a track is defined concentrically and two pit rows for carrying the plurality of pieces of information independently from each other are arranged along the track on the opposite sides thereof. At a specific position where the two pit rows are in a predetermined mutual relation and the plurality of pieces of information read out by irradiating light cannot be distinguished, at least one of two pit rows is shifted by a predetermined distance in the radial direction of the disc substrate by having the track as reference. Consequently, recording capacity can be increased relatively easily.

## Description

### Technical Field

The present invention relates to an optical disc for information reproduction or an optical disc for information recording and reproduction.

### Background Art

As this type of optical disc, traditionally, a CD (Compact Disc), a DVD, a BD (Blueray Disc) and the like are known. For example, as a technology to increase the recording capacity of the optical disc, a patent document 1 discloses a technology in which pits are formed on the left and right side of a position irradiated with a reading laser beam to increase the pattern total number of the pit shapes. By using not only the length of the pits along a track but also the pits that can adopt various shapes, the amount of information carried by the individual pits is increased, so that the entire recording capacity is also considered to be increased.

Patent Document 1: Japanese Patent Application Laid Open No. Hei 08-315368

### Disclosure of Invention

### Subject to be Solved by the Invention

However, in the aforementioned background technology, since the pattern recognition is performed when the pits are read, it is necessary two form each pit to be big. In other words, although the number of the pit patterns is increased, the space between the pits is automatically determined. As a result, it is hard to increase the recording density If it is tried to increase the recording density of the pits for the pattern recognition, the only way to do that is to increase the pit patterns, so that it is basically hard to read them. After all, according to the background technology in which the pattern recognition is used to read the pits in various shapes, there is essentially a limit to increase the recording capacity, which is technically problematic.

In view of the aforementioned problems, it is therefore an object of the present invention to provide an optical disc in which the recording capacity can be increased, relatively easily.

### Means for Solving the Subject

The above object of the present invention can be achieved by an optical disc in which a plurality of pieces of information recorded along a track are reproduced in parallel by irradiation of light which is relatively displaced on the track, the optical disc provided with: a disc substrate; and a recording layer which is formed on the disc substrate, in which the track is defined spirally or concentrically, and in which two pit rows are established which are arranged along the track on both sides of the track and which carry the plurality of pieces of information separately and independently, at least one of pits which form the two pit rows being shifted by a predetermined distance in a radial direction of the disc substrate on the basis of the track in a specified point in which a relative relation between the two pit rows is specified in advance and in which identification among the plurality of pieces of information read by the light irradiation cannot be performed if the two pit rows are arranged on the both sides of the track.

According to the optical disc of the present invention, in its information reproduction, for example, the plurality of pieces of information recorded along the track are reproduced by a reproducing apparatus such as an optical disc player, an optical disc recorder, and an optical disc drive, by the irradiation of light which is relatively displaced on the track of the optical disc, such as the irradiation of a laser beam with respect to the rotating optical disc. At this time, in particular, since the optical disc is constructed in the following manner, the plurality of pieces of information are reproduced in parallel along the track.

In other words, in the optical disc, the track which is a tracking target or object for the light irradiation is defined, spirally or concentrically. In the recording layer, the two pit rows are adjacently disposed, typically with little space or without a space, along the track on the both sides of the track. The two pit rows carry the plurality of pieces of information to be reproduced in parallel, separately and independently. Each of the two pit rows is constructed such that convex or concave pits are aligned along the track, except the specified point detailed later or the like. The individual pits are basically pits simply indicating values by their lengths, and they are not necessarily various patterns distinguished by pattern recognition as described in the aforementioned background technology.

Incidentally, the "track" of the present invention is a line in which the light associated with the light irradiation or the center of a light spot, such as a laser light spot formed on a recording surface, is displaced by tracking control on the recording surface. In other words, the track is not a physically formed linear shape, such as a groove track and a land track, but a track which is geometrically defined on the recording surface as the center line of the two pit rows. Incidentally, a pit for generating a clock signal and a sync signal detailed later may be formed on the track.

According to the study of the present inventors, it is found that the relative relation between the two pit rows is a relation in which the identification among the plurality of pieces of information read by the light irradiation cannot be performed if the two pit rows are arranged on the both sides of the track, depending on the value of the data carried by the adjacent pits, if the two pit rows are arranged in parallel. Here, the expression that the identification among the plurality of pieces of information cannot be performed means that the identification cannot be performed on the basis of a change in light receiving signals corresponding to the length of the pits. In this case, the pit information cannot be detected as the change in the light receiving signals corresponding to the length of the pits. In other words, in the "specified point" having the relative relation, if the two pit rows are arranged on the both sides of the track, even if the pieces of information carried by the pits are different, they cannot be distinguished as they are the same as the light receiving signals corresponding to the length of the pits. Moreover, it is found that the specified point is specified in advance by determining a pair of the structures of the two pit rows, a method of reading the information by the light irradiation on the two pit rows, and the values of two pieces of information recorded in the adjacent pits, under the premise that the recording method is known.

For example, the specified point is specified as a point with a pit value of A in the one pit row and with a pit value of B in the other pit row located at the same track position as the pit with the value of A, if the two pit rows are arranged on the both sides of the track when a unique optical disc is reproduced on a unique reproducing apparatus. Alternatively, for example, it is specified as a point with a pit value of A1 in the one pit row, with a subsequent pit value of A2, with a pit value of B1 in the other pit row located at the same track position as the pit with the value of A1, and with a subsequent pit value of B2.

Moreover, according to the study of the present inventors, it is found that in the specified point, even if the arrangement in the track direction and the shape of the pits remain, if the distance between the adjacent pits which sandwich the track therebetween is locally increased, it is possible to perform the identification between the two pieces of information carried by the adjacent pits on the basis of the change in the light receiving signals corresponding to the length of the pits when the distance is increased to a "certain distance".

Thus, in the optical disc of the present invention, at least one of the pits which form the two pit rows is shifted by the predetermined distance in the radial direction of the disc substrate on the basis of the track, in the specified point. Thus, if the "predetermined distance" of the present invention is set to the "certain distance" or a distance obtained by adding a proper margin to the "certain distance", it is possible to perform the identification among the plurality of pieces of information read by the light irradiation, even in the point. This "predetermined distance" depends on the space of the pits, the resolution of reading light, or the like. In any cases, if the structures of the two pit rows are determined and if the specification of the reading method by the light irradiation is determined, the predetermined distance can be uniquely determined by experiments, experiences, mathematics, or simulations, as the "certain distance" (i.e. the distance between the two pits if the two pits are separated in the radial direction until the identification between the two pieces of information can be performed on the basis of the change in the light receiving signals corresponding to the length of the pits). By this, in the specific point, it is possible to perform the identification among the pieces of information carried by the adjacent pits, thereby reading the information.

At this time, the method of reading each pit does not require the pattern recognition of the individual pits, and the reading method is performed on the basis of the change in the light receiving signals corresponding to the length of the pits. As long as the light receiving signals corresponding to the length of the pits are mutually different and the difference in the light receiving signals can be detected, the detection method such as how to use various signals associated with a four-division light receiving element is arbitrary. For example, simply, it is possible to read the information in a point in which the pits are separated in the radial direction on the basis of a change in a RF signal.

Incidentally, in the specified point, only the one pit may be shifted in the radial direction to the side where it is separated from the other pit, or the both pits may be shifted in the radial direction to the side where they are mutually separated from each other.

As a result, according to the optical disc, the two pit rows are arranged in parallel with respect to the track on which the light irradiation is performed, and the reading can be relatively easily performed without the pattern recognition. Therefore, it is possible to increase the recording density per track, thereby increasing the recording capacity in the end, relatively easily. In particular, if the structure in the specified point is slightly changed, the two-row pits which carry the information separately can be arranged with little space or without a space in most points other than the specified point, so that it is possible to increase the recording capacity, extremely efficiently.

In one aspect of the optical disc of the present invention, in the two pit rows, the at least one pit is further shifted forward along the track in the specified point.

According to this aspect, in the specified point, at least one of the pits which form the two pit rows is shifted forward along the track, i.e. in a circumferential direction of the track.

Here, according to the study of the present inventors, it is found that in the specified point, even if the shape of the pits remains, if at least one of the pits which form the two pit row is shifted along the track (i.e. in the circumferential direction of the track) and the shift amount is increased, it is possible to perform the identification between the two pieces of information carried by the adjacent pits on the basis of the change in the light receiving signal corresponding to the length of the pits when the shift amount is increased to a "certain shift amount".

Thus, in the specified point, in addition to that at least one of the pits is shifted in the radial direction, at least one of the pits is shifted forward along the track. By this, even in the specified point, it is possible to perform the identification among the pieces of information carried by the adjacent pits, thereby reading the information. In particular, by shifting the pits in the radial direction and the track direction, the reading becomes much easier, and the predetermined distance can be also set small.

In another aspect of the optical disc of the present invention, in the two pit rows, the at least one pit is connected to another pit located one before the at least one pit along the track in the specified point, and the at least one pit is shifted in the radial direction of the disc substrate.

According to this aspect, by connecting the one pit in the specified point to another pit that is located before the one pit (i.e. that belongs the same pit row and that is before or behind the one pit), it is possible to reduce the confusing types of the track direction, and the information which is reduced by the shift in the radial direction is supplied. By this, it is possible to perform the identification between the pieces of information carried by the two pits in the specified point. As described above, by connecting the two pits located before and behind by using a space between the pits corresponding to an area in which the pit is not formed originally, it is possible to perform the identification between the pieces of information carried by the pits located before and behind, in the specified point.

Incidentally, even the pieces of information carried by the two adjacent, connected pits can be read on the basis of the change in the light receiving signal corresponding to the length of the pits, under the premise of the connection in this manner.

In another aspect of the optical disc of the present invention, in the two pit rows, a portion corresponding to a clock signal is constructed such that the clock signal generated by the light irradiation is uniform between the two pit rows.

According to this aspect, the portion corresponding to the clock signal in the two pit rows is constructed such that the clock signal is uniform between the two pit rows, so that it is possible to match the timing of reading the information in parallel from the two pit rows on the basis of the clock signal.

In another aspect of the optical disc of the present invention, the two pit rows are constructed such that a clock signal generated by the light irradiation is common.

According to this aspect, the portion corresponding to the clock signal is common in the two pit rows, so that it is possible to almost perfectly match the timing of reading the information in parallel from the two pit rows on the basis of the common clock signal.

Incidentally, with regard to the pit common to the two pit rows (i.e. a clock signal pit) corresponding to the common clock signal, the center in the radial direction may be deviated to the side of the one or other pit row with respect to the track or may be on the track.

In another aspect of the optical disc of the present invention, in the two pit rows, at least one of pits which form the two pit rows is shifted by the predetermined distance in the radial direction, even in a point in which a clock signal generated by the light irradiation is generated, in addition to the specified point.

According to this aspect, even in the point in which the clock signal is generated in the two pit rows, at least one of the pits is shifted by the predetermined distance in the radial direction. Thus, it is possible to ensure the reading of the clock signal, separately and independently, in each pit row.

In another aspect of the optical disc of the present invention, in the two pit rows, a portion corresponding to a sync signal is constructed such that the sync signal generated by the light irradiation is uniform between the two pit rows.

According to this aspect, the portion corresponding to the sync signal in the two pit rows (i.e. the signal for synchronization) is constructed such that the sync signal is uniform between the two pit rows, so that it is possible to synchronize the timing of reading the pieces of information in parallel from the two pit rows on the basis of the sync signal.

In another aspect of the optical disc of the present invention, the two pit rows are constructed such that a sync signal generated by the light irradiation is common.

According to this aspect, the portion corresponding to the sync signal is common in the two pit rows, so that it is possible to almost perfectly match the timing of reading the information in parallel from the two pit rows on the basis of the common sync signal.

Incidentally, with regard to the pit common to the two pit rows (i.e. a sync signal pit) corresponding to the common sync signal, the center in the radial direction may be deviated to the side of the one or other pit row with respect to the track or may be on the track.

In another aspect of the optical disc of the present invention, one unit in error correction when the information is reproduced is divided into two parts which are a first part and a second part, one of the two pit rows carries the first part, and the other of the two pit rows carries the second part in a pit portion adjacent to a pit portion in which the one pit row carries the first part.

According to this aspect, typically, one unit of the information in the error correction with a size of 64KB (Kilo Bytes) corresponding to one ECC (Error Correction Code) block or a size of 128KB corresponding to one pair of ECC blocks is divided into the first part which is the former half and the second part which is the latter half. The first part (e.g. the former half 64 KB) is carried by the one pit row, and the second part (e.g. the latter half 64KB) is carried by the other pit row. After that, when the optical disc is reproduced, the error correction is performed in parallel in each of the pit rows read in parallel, so that error resistance dramatically improves.

The above object of the present invention can be also achieved by another optical disc in which a plurality of pieces of information recorded along a track are reproduced in parallel by irradiation of light which is relatively displaced on the track, the optical disc provided with: a disc substrate; and a recording layer which is formed on the disc substrate, in which the track is defined spirally or concentrically, and in which two pit rows are established which are arranged along the track on both sides of the track and which carry the plurality of pieces of information separately and independently, one unit in error correction when the information is reproduced being divided into two parts which are a first part and a second part, one of the two pit rows carrying the first part, and the other of the two pit rows carrying the second part in a pit portion adjacent to a pit portion in which the one pit row carries the first part.

According to the other optical disc of the present invention, in its information reproduction, the plurality of pieces of information recorded along the track are reproduced by a reproducing apparatus by the irradiation of light which is relatively displaced on the track of the optical disc. At this time, in the optical disc, the track which is a tracking target or object for the light irradiation is defined, spirally or concentrically. In the recording layer, the two pit rows are adjacently disposed, typically with little space or without a space, along the track on the both sides of the track. The two pit rows carry the plurality of pieces of information to be reproduced in parallel, separately and independently. Thus, in the optical disc, the plurality of pieces of information are reproduced in parallel along the track.

Here in the present invention, typically, one unit of the information in the error correction with a size of 64KB corresponding to one ECC block or a size of 128KB corresponding to one pair of ECC blocks is divided into the first part which is the former half and the second part which is the latter half. The first part is carried by the one pit row, and the second part is carried by the other pit row. Therefore, when the optical disc is reproduced, the error correction is performed in parallel in each of the pit rows read in parallel, so that error resistance dramatically improves.

Incidentally, as the way to combine the ECC blocks, one type of ECC may be generated for a block of the 64KB information in each pit row and may be recorded into each pit row. Alternatively, two type of ECCs may be generated for a block of the 128KB information in the two pit rows and may be recorded into the two pit rows.

Consequently, according to the other optical disc of the present invention, the two pit rows are arranged in parallel with respect to the track on which the light irradiation is performed, and the reading of the two pit rows can be relatively easily performed under the high error correction capability. Therefore, it is possible to increase the recording density per track, thereby increasing the recording capacity, relatively easily, in the end. In particular, if the unit is divided in the error correction, it is possible to arrange the two pit rows which carry the information separately with little space or without a space, thereby increasing the recording capacity, extremely efficiently.

Incidentally, even the other optical disc of the present invention can also adopt the same various aspects as those of the aforementioned optical disc of the present invention, as occasion demands.

The operation and other advantages of the present invention will become more apparent from the embodiment explained below.

As explained in detail later, according to the optical disc of the present invention, the pit is shifted by the predetermined distance in the radial direction in the specified point. On the other hand, according to the other optical disc of the present invention, one unit in the error correction is divided, and the divided units are carried in parallel by the two pit rows. Thus, it is possible to increase the recording capacity, relatively easily.

### Brief Description of Drawings

[FIG. 1] FIG. 1 is a functional block diagram schematically showing the constituents of an information reproducing apparatus for reproducing information on an optical disc in a first embodiment.
[FIG. 2] FIG. 2 is a schematic diagram showing the arrangement of pit rows which establishes the optical disc in the first embodiment.
[FIG. 3] FIG. 3 is a schematic diagram showing a shift position of pits which establish the optical disc in the first embodiment.
[FIG. 4] FIG. 4 is a schematic diagram showing another shift position of the pits which establish the optical disc in the first embodiment.
[FIG. 5] FIG. 5 is a schematic diagram showing another shift position of the pits which establish the optical disc in the first embodiment.
[FIG. 6] FIG. 6 is a schematic diagram showing the data structure of the optical disc in the first embodiment.
[FIG. 7] FIG. 7 is a flowchart showing an information reproduction process in the first embodiment.

### Description of Reference Codes

- 1: disc substrate
- 2: recording layer
- 3: CPU
- 4: optical pickup
- 4d: four-division photodetector
- 5: tracking servo processing device
- 6: focus servo processing device
- 7: four-division signal processing device
- 100: optical disc
- 200: optical disc player

### Best Mode for Carrying Out the Invention

Hereinafter, an embodiment of the present invention will be described with reference to the drawings.

### <First Embodiment>

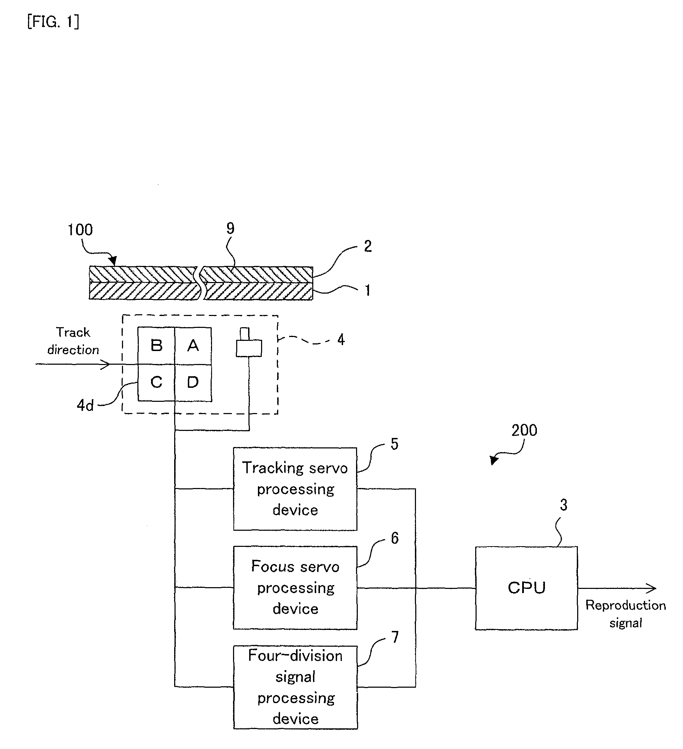

Firstly, with reference to FIG. 1, an explanation will be given on the structure of an optical disc player which reproduces an optical disc in a first embodiment. FIG. 1 is a functional block diagram showing the optical disc player which reproduces the optical disc in the first embodiment.

As shown in FIG. 1, an optical disc player 200, as one example of a reproducing apparatus, applies a laser beam to a rotating optical disc 100 while being relatively displaced on a track 9 of the optical disc 100, thereby reproducing a plurality of pieces of information recorded along the track 9. The optical disc player 200 is provided mainly with a CPU 3, an optical pickup 4, a tracking servo processing device 5, a focus servo processing device 6, and a four-division signal processing device 7 for information reproduction on the optical disc 100.

The optical pickup 4 is an optical system for reading the information recorded on the optical disc 100. The optical pickup 4 applies a reading laser beam to the optical disc 100 and receives the laser beam reflected at a light-focusing position on the optical disc 100 by using a four-division photodetector 4d through a beam splitter not illustrated or the like. The optical pickup 4 outputs a signal based on the received laser beam to the tracking servo processing device 5, the focus servo processing device 6, and the four-division signal processing device 7. The optical pickup 4 is feedback-controlled by the tracking servo processing device 5 and the focus servo processing device 6. By this, the information on the optical disc 100 is read, highly accurately.

The tracking servo processing device 5 generates a tracking error signal from a signal outputted by the four-division photodetector 4d and performs feedback-control for adjusting the tracking position of the optical pickup 4 on the basis of the tracking error signal under the control of the CPU 3. In the embodiment, in particular, as detailed later, tracking control is performed by using the center line of two pit rows arranged in parallel without a space, as a track 9 which is a tracking control target.

The focus servo processing device 6 generates a focus error signal from the signal outputted from the four-division photodetector 4d and performs feedback-control for adjusting the focus position of the optical pickup 4 on the basis of the focus error signal under the control of the CPU 3. In the embodiment, in particular, as detailed later, focus control is performed so as to focus on the both of the two pit rows arranged in parallel without a space.

The four-division signal processing device 7 generates a RF signal from the signal outputted from the four-division photodetector 4d and outputs it to the CPU 3.

The CPU 3 controls each of the devices of the optical player 200. Moreover, the CPU 3 reproduces the two-series information corresponding to the two pit rows, from the RF signal generated by the four-division signal processing device 7, or additionally from the logical outputs of four signals of the four-division photodetector 4d, such as the tracking error signal generated by the tracking servo processing device 5 and the focus error signal generated by the focus servo processing device 6. Here, the "the logical outputs of four signals of the four-division photodetector 4d" means predetermined logical sum, logical product or the like, such as a difference in the sum of the signals from the two photodetectors located before and behind on the basis of the track direction, a difference in the sum of the signals from the two photodetectors arranged right and left on the basis of the track direction, and a difference in the sum of the signals from the two photodetectors arranged diagonally on the basis of the track direction, and it does not necessarily mean the tracking error signal and the focus error signal.

The optical disc 100 which is an information reproduction target is formed of the disc substrate 1 and the recording layer 2. The recording layer 2 is formed on the top surface of the disc substrate 1.

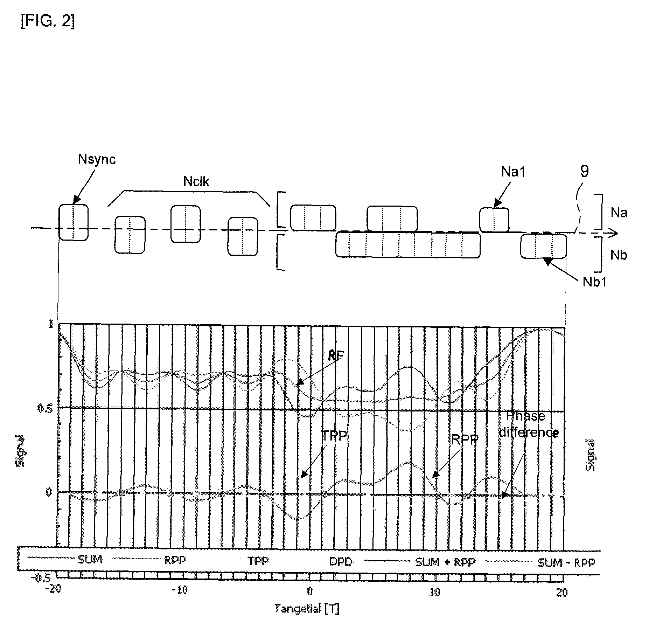

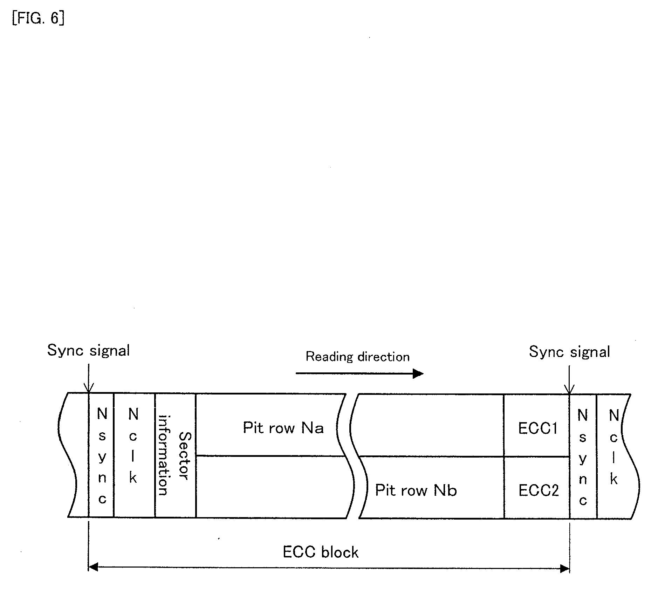

Next, the structure of the optical disc in the first embodiment will be explained with reference to FIG. 2 to FIG. 6. FIG. 2 to FIG. 5 are schematic diagrams showing the two pit rows which establish the optical disc in the first embodiment, in association with the RF signal obtained on a time axis from the pit rows and various logical outputs. FIG. 6 is a schematic diagram showing the data structure of the optical disc in the first embodiment.

The recording layer 2 has the track 9 which is the tracking target, predetermined concentrically. As shown in FIG. 2, the recording layer 2 has two pit rows Na and Nb arranged along the track 9 (shown in a two-dot chain line in FIG. 2 to FIG. 5) on the both sides of the track 9. In the information reproduction on the optical disc 100, light irradiation is performed simultaneously on the two pit rows Na and Nb, by which the plurality of pieces of information are reproduced in parallel. At this time, the tracking control is performed such that a light spot generated from one main beam is relatively displaced on the track 9 located on the center line of the two pit rows Na and Nb.

The two pit rows Na and Nb are typically disposed adjacent to each other without a space, and the two pit rows carry the plurality of pieces of information to be reproduced in parallel, separately and independently. On the upstream side in the reproduction direction (on the left side in FIG. 2 to FIG. 5) of the two pit rows Na and Nb, a plurality of pits Nclk for forming a clock signal and a pit Nsync for generating a sync signal are disposed in order to perform the reproduction in parallel.

The plurality of pits Nclk are constructed such that the clock signal generated by the light irradiation is common to the two pit rows Na and Nb. In the plurality of pits Nclk, the center is deviated to the pit row Na side or the pit row Nb side in the radial direction of the disc substrate 1. Due to the pits Nclk, it is possible to match the timing of reading pit information in parallel from the two pit rows Na and Nb on the basis of the common clock signal.

The pit Nsync is constructed such that the sync signal generated by the light irradiation is common to the two pit rows Na and Nb. In the pit Nsync, the center is deviated to the pit row Na side or the pit row Nb side in the radial direction of the disc substrate 1. Due to the pit Nsync, it is possible to match the timing of reading the pit information in parallel from the two pit rows Na and Nb on the basis of the common sync signal.

As described above, in the information reproduction on the optical disc 100 in which the two pit rows Na and Nb are disposed adjacent to each other without a space, some of the values of data carried by adjacent pits do not allow the identification among the plurality of pieces of information read by the light irradiation, so that the pit information cannot be read as a change in a light receiving signal corresponding to the length of the pits. Such an unreadable point is specified in advance by an information recording method, the structure of the two pit rows Na and Nb, a method of reading the information by the light irradiation, and a pair of values of the two pieces of information recorded in the adjacent pits. Hereinafter, in the embodiment, such a point shall be referred to as a "specified point".

On the lower side of FIG. 2, not only the RF signal in FIG. 1 but also changes with time in a TPP signal, a RPP signal, and a phase difference signal are shown as one example of the logical output of the four signals of the four-division photodetector 4d. Here, the RF signal is a signal indicating the sum of signals from an area A to an area B of the four-division photodetector 4d. The TPP signal is a signal indicating a difference between the sum of signals in areas A and D on the front side of the four-division photodetector 4d and the sum of signals in areas B and C on the rear side. The RPP signal is a signal indicating a difference between the sum of signals in the areas A and B on the left side of the four-division photodetector 4d and the sum of signals in the areas C and D on the right side. The phase difference signal is a signal indicating a difference between the sum of signals in the areas A and C, which make a diagonal pair, of the four-division photodetector 4d and the sum of signals in the areas B and D, which make a diagonal pair.

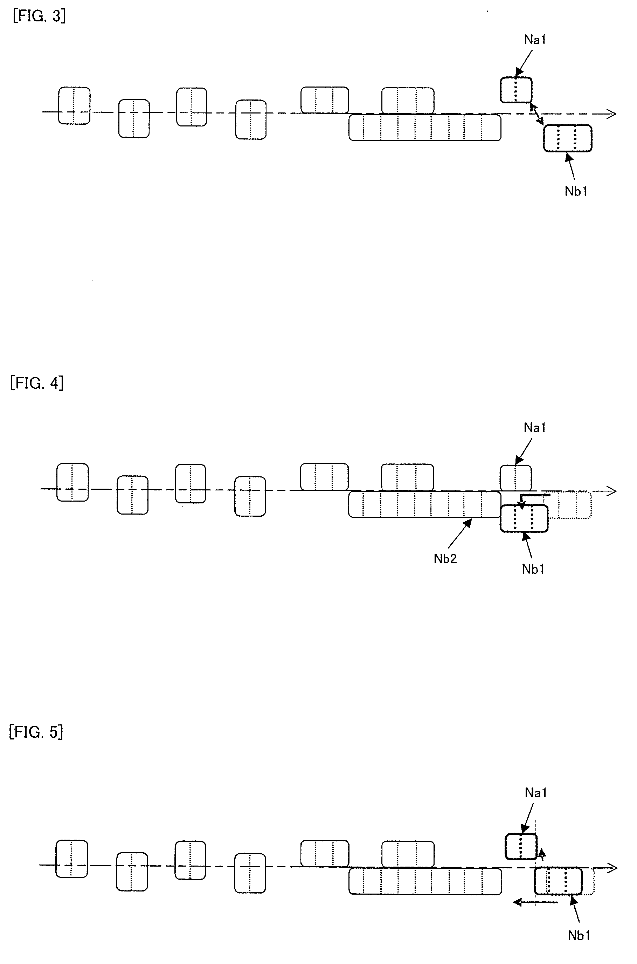

The specified point on the upper side of FIG. 2 means a point in which any of the RF signal and the TPP signal, the RPP signal, and the phase difference signal, which are various examples of the logical output, cannot uniquely determine the shape of the two pit rows Na and Nb (i.e. in which it cannot be uniquely determined what is the pair of the two adjacent pits centered on the track). As shown in FIG. 2, if the pit rows Na and Nb are simply in two lines, a complicated and sophisticated processing technology such as pattern recognition is required to uniquely determine the pit shape in the specified point; however, this prevents miniaturization of the two pit rows Na and Nb and hardly or does not lead to the increase in the recording density in the end. Thus, in the embodiment, in the specified point, the simple arrangement of the two pit rows Na and Nb shown in FIG. 2 is locally destroyed with a predetermined rule, as detailed next with reference to FIG. 3. By destroying the arrangement, the complicated and sophisticated reproduction process is avoided.

In FIG. 3, an explanation will be given on the structures of the two pit rows Na and Nb in the specified point and the information reproduction there, i.e. a method of reading the pit information. In the optical disc 100 in the embodiment, in order to read the pit information in the specified point, at least one of the pits which form the two pit rows Na and Nb is shifted by a predetermined distance in the radial direction of the disc substrate 1 on the basis of the track 9. The predetermined distance is determined as a distance that is greater than or equal to the distance in which the shape of the two pit rows Na and Nb is uniquely determined by any of the values of the RF signal and the TPP signal, the RPP signal, or the phase difference signal, which are various examples of the logical output. Incidentally, if the distance is set too long, there arises a need to form a large light spot, and that is possibly an obstacle to increase the recording density. Thus, it is not preferable to set the distance to be excessively greater than the distance in which the shape of the two pit rows Na and Nb is uniquely determined from the RF signal and the like, and it is practically preferable to add a slight margin to the distance.

For example, as shown in FIG. 3, a pit Na1 or a pit Nb1 which exists in the specified point is shifted by a predetermined distance in the radial direction D of the disc substrate 1. By this, it is possible to uniquely determine the shape of the two pit rows Na and Nb in the specified point from the value of the RF signal or the like, thereby reading the pit information in the specified point.

Incidentally, in order to read the pit information in the specified point, at least one of the pits which form the two pit rows Na and Nb may be shifted forward along the track 9 (to the left in FIG. 2 to FIG. 5). Moreover, at least one of the pits which form the two pit rows Na and Nb may be shifted along the track 9 to connect to another pit located one before the at least one pit.

For example, as shown in FIG. 4, the pit Nb1 which exists in the specified point is shifted forward along the track 9 (to the left in FIG. 2 to FIG. 5) and further shifted by the predetermined distance in the radial direction D of the disc substrate 1. At this time, the pit Nb1 is connected to a pit Nb2 located one before. By this, it is possible to read the pit information in the specified point, thereby performing the identification among the plurality of pieces of information.

Incidentally, in order to read the pit information in the specified point, one of the pits which form the two pit rows Na and Nb may be shifted in the radial direction D of the disc substrate 1, and the other pit may be shifted forward along the track 9 (to the left in FIG. 2 to FIG. 5). Moreover, at this time, the edge on the front side of the other pit may be shifted to be located at the same position in the radial direction as the edge on the rear side of the one pit.

For example, as shown in FIG. 5, the pit Na1 which exists in the specified point is shifted by the predetermined distance in the radial direction D of the disc substrate 1, and the pit Nb1 is shifted forward along the track 9 (to the left in FIG. 2 to FIG. 5). At this time, the edge on the front side of the pit Nb1 is located at the same position in the radial direction as the edge on the rear side of the pit Na1. By this, it is possible to read the pit information in the specified point, thereby performing the identification among the plurality of pieces of information.

In FIG. 6, in the process of the information reproduction on the optical disc 100, error correction is performed in each ECC block. One unit of the ECC block is provided with the pit Nsync common to the two pit rows Na and Nb, the plurality of pits Nclk, sector information, each of the two pit rows Na and Nb, and each of ECC1 and ECC2, in order of the information reproduction. In the sector information, information such as the structures of the pit rows Na and Nb in each sector and the specification of the reading method by the light irradiation is recorded.

For example, in the structure in FIG. 6, one ECC block which is 128 KB (Kilo Bytes) may be divided into small 64KB ECC blocks, each of which corresponds to relative one of the pit rows Na and Nb. At this time, an ECC1 is an error correction code for the small ECC block of the one pit row Na. Moreover, an ECC2 is an error correction code for the small ECC block the other pit row Nb. If the ECC block is constructed in this manner and the ECC1 and the ECC 2 are provided, the error correction can be performed on each pit row, so that it is possible to increase error resistance in comparison with a case where the error correction is performed collectively on the two pit rows. In particular, if error incidence differs in each pit row, the error resistance can be remarkably increased. In the actual reading, the error incidence may differ in each pit row due to light deflection in the optical system or the like, so that such a structure is extremely useful.

Alternatively, in the structure of FIG. 6, the ECC1 may be an error correction code for all the ECC blocks of the two pit rows Na and Nb, and the ECC2 may be an error correction code for all the ECC blocks of the two pit rows Na and Nb. In other words, the same value of the code is written in the mutually different pit rows as the ECC1 and the ECC2, so that the error resistance can be remarkably increased in comparison with a case where only one ECC block is written into the two pit rows. In particular, even if the error incidence differs in each pit row, any of the ECCs is highly accurate, so that the error resistance can be remarkably increased.

By using the two ECCs to increase the error resistance in the above manner, even if the error incidence increases to a greater or lesser degree when the two pit rows shown in FIG. 2 to FIG. 5 are read in parallel by using one light spot, it is possible to sufficiently respond to that in practice.

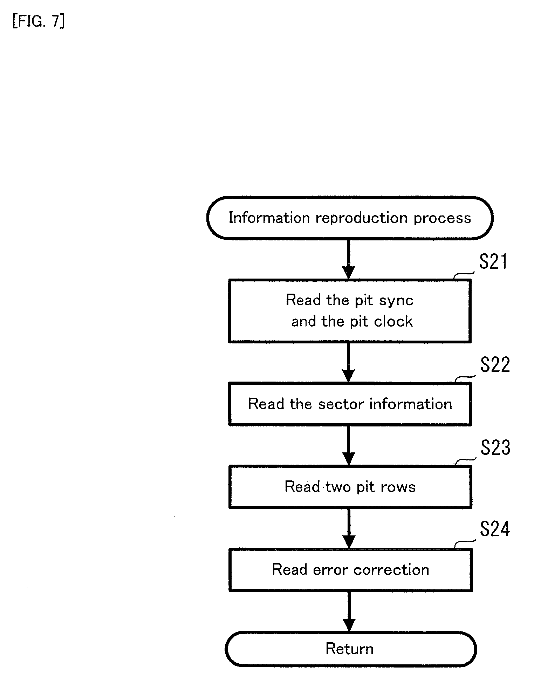

Next, with reference to FIG. 7, an explanation will be given on an information reproduction process using the optical disc 100 in the first embodiment.

### (Information Reproduction Process in First Embodiment)

FIG. 7 is a flowchart showing an information reproduction process of reproduction the optical disc 100 in the first embodiment by using the optical disc player 200. The information reproduction process indicates a process of reading one ECC block in record information on the optical disc 100.

Specifically, in FIG. 7, the optical pickup 4 is controlled by the tracking servo processing device 5 and the focus servo processing device 6, and the laser beam is applied along the track 9 predetermined on the optical disc 100. By the light irradiation, firstly, the pit Nsync and the pits Nclk are read (step S21), and then, the sector information is read (step S22). Then, from the read sector information, the structures of the pits (in particular, which are the two pit rows Na and Nb) and the reading method (e.g. the structure of the ECC block or the like) are recognized by the CPU 3, and the two pit rows Na and Nb are read in parallel (step S23). At this time, the two pit rows Na and Nb are read in the same timing on the basis of the common sync signal and clock signal. When the two pit rows Na and Nb are read, the ECC1 and the ECC2 are read in parallel in the same manner (step S24). By the read ECC1 and ECC2, the error correction is performed on each of the information about the two pit rows Na and Nb. By this, it is confirmed whether or not the pit information is read without errors, and the series of operation processes is ended.

As described above, according to this embodiment, the two pit rows Na and Nb which carry the plurality of pieces of information separately and independently are arranged in parallel with respect to the track 9 on which the light irradiation is performed, and the pattern recognition is not required in the reading of the pits. In particular, if the pit in the specified point is shifted by a predetermined distance in a predetermined direction, the pit can be read. Thus, in most points other than the specified point, it is possible to arrange the pits without a space, thereby increasing the recording capacity, relatively easily.

Incidentally, in the embodiment, the information reproduction on the optical disc 100 was explained; however, information recording can adopt the same embodiment.

Moreover, the plurality of pits Nclk are common to the two pit rows Na and Nb; however, they may be formed from the two pit rows. In this case, in a point in which the clock signal cannot be read, at least one of the pits is shifted by a predetermined distance in the radial direction of the disc substrate 1. By this, it is possible to ensure the reading of the clock signal.

The present invention is not limited to the aforementioned examples, but various changes may be made, if desired, without departing from the essence or spirit of the invention which can be read from the claims and the entire specification.

### Industrial Applicability

The present invention can be applied to an optical disc for information reproduction or an optical disc for information recording and reproduction, or the like.

## Claims

1. An optical disc in which a plurality of pieces of information recorded along a track are reproduced in parallel by irradiation of light which is relatively displaced on the track, the optical disc comprising:
a disc substrate; and
a recording layer which is formed on the disc substrate, in which the track is defined spirally or concentrically, and in which two pit rows are established which are arranged along the track on both sides of the track and which carry the plurality of pieces of information separately and independently,
at least one of pits which form the two pit rows being shifted by a predetermined distance in a radial direction of the disc substrate on the basis of the track in a specified point in which a relative relation between the two pit rows is specified in advance and in which identification among the plurality of pieces of information read by the light irradiation cannot be performed if the two pit rows are arranged on the both sides of the track.

2. The optical disc according to claim 1, wherein in the two pit rows, the at least one pit is further shifted forward along the track in the specified point.

3. The optical disc according to claim 1, wherein in the two pit rows, the at least one pit is connected to another pit located one before the at least one pit along the track in the specified point, and the at least one pit is shifted in the radial direction of the disc substrate.

4. The optical disc according to claim 1, wherein in the two pit rows, a portion corresponding to a clock signal is constructed such that the clock signal generated by the light irradiation is uniform between the two pit rows.

5. The optical disc according to claim 1, wherein the two pit rows are constructed such that a clock signal generated by the light irradiation is common.

6. The optical disc according to claim 1, wherein in the two pit rows, at least one of pits which form the two pit rows is shifted by the predetermined distance in the radial direction, even in a point in which a clock signal generated by the light irradiation is generated, in addition to the specified point.

7. The optical disc according to claim 1, wherein in the two pit rows, a portion corresponding to a sync signal is constructed such that the sync signal generated by the light irradiation is uniform between the two pit rows.

8. The optical disc according to claim 1, wherein the two pit rows are constructed such that a sync signal generated by the light irradiation is common.

9. The optical disc according to claim 1, wherein
one unit in error correction when the information is reproduced is divided into two parts which are a first part and a second part,
one of the two pit rows carries the first part, and
the other of the two pit rows carries the second part in a pit portion adjacent to a pit portion in which the one pit row carries the first part.

10. The optical disc according to claim 1, in which a plurality of pieces of information recorded along a track are reproduced in parallel by irradiation of light which is relatively displaced on the track, the optical disc comprising:
a disc substrate; and
a recording layer which is formed on the disc substrate, in which the track is defined spirally or concentrically, and in which two pit rows are established which are arranged along the track on both sides of the track and which carry the plurality of pieces of information separately and independently,
one unit in error correction when the information is reproduced being divided into two parts which are a first part and a second part,
one of the two pit rows carrying the first part, and
the other of the two pit rows carrying the second part in a pit portion adjacent to a pit portion in which the one pit row carries the first part.
